# EUROPEAN PATENT SPECIFICATION

(11) **EP 4 397 920 B1**
(45) Date of publication and mention of the grant of the patent: **09.12.2026**
(21) Application number: 22864704.6
(22) Date of filing: 01.09.2022
(51) Int. Cl.: F25B 1/00, C09K 5/04

(54) **COMPOSITION CONTAINING REFRIGERANT, USE OF SAME, REFRIGERATOR HAVING SAME, AND METHOD FOR OPERATING SAID REFRIGERATOR**
ZUSAMMENSETZUNG MIT KÜHLMITTEL, VERWENDUNG DAVON, KÜHLSCHRANK DAMIT UND VERFAHREN ZUM BETRIEB DES BESAGTEN KÜHLSCHRANKS
COMPOSITION CONTENANT UN FLUIDE FRIGORIGÈNE, SON UTILISATION, RÉFRIGÉRATEUR DOTÉ DE LADITE COMPOSITION, ET PROCÉDÉ D'ACTIONNEMENT DUDIT RÉFRIGÉRATEUR

(30) Priority: 02.09.2021 JP 2021143459
(43) Date of publication of application: 10.07.2024
(73) Proprietor: Daikin Industries, Ltd., Osaka-shi, Osaka 530-0001 (JP)
(72) Inventor: ITANO, Mitsushi, Osaka-shi, Osaka 530-0001 (JP); GOTOU, Tomoyuki, Osaka-shi, Osaka 530-0001 (JP); YOSHIMURA, Takashi, Osaka-shi, Osaka 530-0001 (JP); USUI, Takashi, Osaka-shi, Osaka 530-0001 (JP); NAKAUE, Tsubasa, Osaka-shi, Osaka 530-0001 (JP); TOKUNO, Satoshi, Osaka-shi, Osaka 530-0001 (JP)
(74) Representative: Hoffmann Eitle
(86) International application number: PCT/JP2022/033020
(87) International publication number: WO 2023/033122

(56) References cited:
- WO-A1-2015/125881
- WO-A1-2015/125883
- WO-A1-2015/125884
- WO-A1-2015/141678
- WO-A1-2015/186670
- WO-A1-2015/186671
- WO-A1-2019/123805
- WO-A1-2019/124402
- WO-A1-2019/124404
- WO-A1-2020/145375
- CN-A- 113 150 745

## Description

### Technical Field

The present disclosure relates to a composition comprising a refrigerant, use of the composition, a refrigerating machine having the composition, and a method for operating the refrigerating machine.

### Background Art

As a working medium for a heat cycle that can replace R410A, a working medium for a heat cycle comprising trifluoroethylene (HFO-1123) and 1,2-difluoroethylene (HFO-1132) has been proposed (Patent Literature (PTL) 1).

PTL 2 has proposed a composition for a heat cycle system including a working medium for the heat cycle including HFO-1132 and stabilizers for suppressing deterioration of the working medium, an agent to address oxidation resistance, an agent to address heat resistance, and a metal inactivating agent.

PTL 3 has proposed a composition for a heat cycling system including a working medium for the heat cycle including HFO-1132, oxygen containing synthetic oil, and refrigeration oil such as hydrocarbon refrigeration oil.

### Citation List

### Patent Literature

PTL 1: WO2015/141678
PTL 2: WO2015/186670
PTL 3: WO2015/186671

### Summary of Invention

### Technical Problem

An object of the present disclosure is to provide a novel low-GWP mixed refrigerant.

### Solution to Problem

The present invention provides a composition comprising a refrigerant comprising 1,1-difluoroethane (R152a) difluoromethane (R32) and trans-1,2-difluoroethylene (HFO-1132(E)) in a total amount of ≥ 99.5 mass% based on the entire refrigerant, wherein,
when the mass% of HFO-1132(E), R32, and R152a based on their sum is respectively represented by x, y, and z, coordinates (x,y,z) in a ternary composition diagram in which the sum of HFO-1132(E), R32, and R152a is 100 mass% are within the range of a figure surrounded by straight lines CD, DO, OB, BA, and AC that connect the following five points:
C (54.0, 46.0, 0.0),
D (38.0, 0.0, 62.0),
O (0.0, 0.0, 100.0),
B (0.0, 50.0, 50.0), and
A (40.8, 59.2, 0.0),
or on the straight lines CD, DO, OB, and BA (excluding the points C, O, and A).

According to an embodiment of the present invention (= 2^{nd} aspect), the coordinates (x,y,z) in the ternary composition diagram are within the range of a figure surrounded by line segments CD, DE, EE', E'F, FB, BA,
and AC that connect the following seven points:
C (54.0, 46.0, 0.0),
D (38.0, 0.0, 62.0),
E (14.0, 0.0, 86.0),
E' (7.0, 7.0, 86.0),
F (0.0, 14.4, 85.6),
B (0.0, 50.0, 50.0), and
A (40.8, 59.2, 0.0),
or on the line segments CD, DE, EE', E'F, FB, and BA (excluding the points C and A),
wherein the line segments CD, DE, FB, BA, and AC are straightlines, and coordinates (x,y,z) of points on the line segments EE' and E'F are represented by (x, 0.0041x21.0857x+14.4, -0.0041x2+0.0857x+85.6).

According to an embodiment of the present invention (=3^{rd} aspect), the composition of the 2^{nd} aspect, wherein the coordinates (x,y,z) in the ternary composition diagram are within the range of a figure surrounded by line segments CG, GG', G'H', H'H, HB, BA, and AC that connect the following seven points:
C (54.0, 46.0, 0.0),
G (40.8, 8.1, 51.1),
G' (26.5, 20.7, 52.8),
H' (12.2, 34.7, 53.1),
H (0.0, 47.6, 52.4),
B (0.0, 50.0, 50.0), and
A (40.8, 59.2, 0.0),
or on the line segments CG, GG', G'H', H'H, HB, and BA (excluding the points C and A), wherein the line segments CG, H'H, HB, BA, and AC are straight lines, and coordinates (x,y,z) of points on the line segments GG' and G'H' are represented by (x, 0.0034x2-1.1115x+47.751, -0.0034x2+0.1115x+52.249).

According to an embodiment of the present invention (4^{th} aspect), the composition of the 2^{nd} aspect, wherein the coordinates (x,y,z) in the ternary composition diagram are within the range of a figure surrounded by line segments C'D, DE, EE', E'F, FB', and B'C' that connect the following six points:
C' (53.4, 43.8, 2.8),
D (38.0, 0.0, 62.0),
E (14.0, 0.0, 86.0),
E' (7.0, 7.0, 86.0),
F (0.0, 14.4, 85.6), and
B' (0.0, 32.0, 68.0),
or on the line segments C'D, EE', E'F, FB', and B'C'; wherein the line segments C'D, FB', and B'C' are straight lines.

According to an embodiment of the present invention (5^{th} aspect), the composition of the 3^{rd} aspect, wherein the coordinates (x,y,z) in the ternary composition diagram are within the range of a figure surrounded by line segments C'G, GG', G'H', and H'C' that connect the following four points:
C' (53.4, 43.8, 2.8),
G (40.8, 8.1, 51.1),
G' (26.5, 20.7, 52.8), and
H' (12.2, 34.7, 53.1),
or on the line segments C'G, GG', G'H', and H'C'.

According to an embodiment of the present invention (6^{th} aspect), the composition of the 4^{th} aspect, wherein the coordinates (x,y,z) in the ternary composition diagram are within the range of a figure surrounded by straight lines D'D, DJ, JK, and KD' that connect the following four points:
D' (43.0, 14.3, 42.7),
D (38.0, 0.0, 62.0),
J (28.3, 0.0, 71.7), and
K (19.3, 9.0, 71.7),
or on the straight lines D'D, DJ, JK, and KD'.

According to an embodiment of the present invention (7^{th} aspect), the composition of the 4^{th} aspect, wherein the coordinates (x,y,z) in the ternary composition diagram are within the range of a figure surrounded by straight lines D'D, DL, LM, and MD' that connect the following four points:
D' (43.0, 14.3, 42.7),
D (38.0, 0.0, 62.0),
L (22.6, 0.0, 77.4), and
M (14.0, 7.8, 78.2),
or on the straight lines D'D, DL, LM, and MD'.

According to an embodiment of the present invention (8^{th} aspect), the refrigerant further comprises HFO-1123.

The present invention further provides a refrigerating method comprising operating a refrigerant cycle using the composition of the present invention.

According to one embodiment of the present refrigerating method, the composition of the 5^{th} aspect is used for operating a refrigeration apparatus which is an air conditioner for gasoline vehicles, hybrid vehicles, electric vehicles, or hydrogen vehicles.

The present invention further provides a refrigeration apparatus comprising the composition of the present invention as a working fluid.

According to one embodiment of the present refrigeration apparatus, the refrigeration apparatus comprises a composition comprising R152a R32, HFO-1132(E) and HFO-1123 as a working fluid and is an air conditioner for gasoline vehicles, hybrid vehicles, electric vehicles, or hydrogen vehicles.

The present invention further provides the use of the composition of the 5^{th} aspect for operating an air-conditioning system for vehicles.

The present invention further provides the use of the composition of the present invention as an alternative refrigerant for R410A, R134a, R1234yf, or R404A.

### Advantageous Effects of Invention

The refrigerant according to the present disclosure has a low GWP.

### Brief Description of Drawings

Fig. 1 is a ternary diagram showing the composition of a refrigerant according to the present disclosure.
Fig. 2 is a ternary diagram showing the composition of a refrigerant according to the present disclosure.
Fig. 3 is a ternary diagram showing the composition of a refrigerant according to the present disclosure.
Fig. 4 is a ternary diagram showing the composition of a refrigerant according to the present disclosure.

### Description of Embodiments

The present inventors conducted intensive studies to solve the above problem, and consequently found that the various mixed refrigerants described below have the above properties.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "air-conditioning system for vehicles" is a type of refrigeration apparatus for use in vehicles, such as gasoline vehicles, hybrid vehicles, electric vehicles, and hydrogen vehicles. The air-conditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, a "toxicity class A" refrigerant means that the occupational exposure limit (OEL) of the mixed refrigerant is 400 ppm or more in accordance with the US ANSI/ASHRAE Standard 34-2019. A "toxicity class B" refrigerant means that the occupational exposure limit of the mixed refrigerant is less than 400 ppm in accordance with the US ANSI/ASHRAE Standard 34-2019.

In the present invention, the occupational exposure limit (OEL) of a mixed refrigerant refers to a value evaluated based on the center composition, unless otherwise specified. However, calculation is performed with the OEL of each refrigerant as follows.
R32: 1000 ppm
R152a: 1000 ppm
HFO-1132 (E) : 350 ppm

The OEL of the center composition of a mixed refrigerant is calculated in accordance with the following formula.$OEL = \frac{1}{\frac{{mf}_{1}}{{a}_{1}} + \frac{{mf}_{2}}{{a}_{2}} + … + \frac{{mf}_{n}}{{a}_{n}}}$ wherein aₙ represents the OEL of each refrigerant compound, and mfₙ represents the mole fraction of each refrigerant compound.

The unit for the pressure described in the present specification is absolute pressure, unless otherwise specified.

### 1. Refrigerant

The refrigerant according to the present disclosure comprises 1,1-difluoroethane (R152a), and difluoromethane (R32) and/or trans-1,2-difluoroethylene (HFO-1132(E)). Of R152a, R32, and HFO-1132(E) contained in the refrigerant according to the present disclosure, a refrigerant that is contained in an amount of 0.5 mass% or more based on the entire refrigerant may be referred to as an "essential refrigerant."

The refrigerant according to the present disclosure is a low-GWP mixed refrigerant.

In the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, the refrigerant has an occupational exposure limit of 400 ppm or more and is classified as ASHRAE toxicity class "A."

In the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less.

### Requirements

The coordinates (x,y,z) are within the range of a figure surrounded by straight lines CD, DO, OB, BA, and AC that connect the following five points:
point C (54.0, 46.0, 0.0),
point D (38.0, 0.0, 62.0),
point O (0.0, 0.0, 100.0),
point B (0.0, 50.0, 50.0), and
point A (40.8, 59.2, 0.0),
or on the straight lines CD and BA (excluding the points C, O, and A).

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less and a refrigerating capacity ratio of 50% or more relative to that of R410A.

### Requirements

The coordinates (x,y,z) are within the range of a figure surrounded by line segments CD, DE, EE', E'F, FB, BA, and AC that connect the following seven points:
point C (54.0, 46.0, 0.0),
point D (38.0, 0.0, 62.0),
point E (14.0, 0.0, 86.0),
point E' (7.0, 7.0, 86.0),
point F (0.0, 14.4, 85.6),
point B (0.0, 50.0, 50.0), and
point A (40.8, 59.2, 0.0),
or on the line segments CD, EE', E'F, and BA (excluding the points C and A),
the line segments CD, DE, FB, BA, and AC are straight lines, and coordinates (x,y,z) of points on the line segments EE' and E'F are represented by (x, 0.0041x2-1.0857x+14.4, -0.0041x2+0.0857x+85.6).

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less and a refrigerating capacity ratio of 70% or more relative to that of R410A.

### Requirements

The coordinates (x,y,z) are within the range of a figure surrounded by line segments CG, GG', G'H', H'H, HB, BA, and AC that connect the following seven points:
point C (54.0, 46.0, 0.0),
point G (38.0, 0.0, 62.0),
point G' (16.3, 0.0, 83.7),
point H' (8.2, 6.9, 84.9),
point H (0.0, 14.4, 85.6),
point B (0.0, 50.0, 50.0), and
point A (40.8, 59.2, 0.0),
or on the line segments CG, GG', G'H', H'H, and BA (excluding the points C and A),
the line segments CG, H'H, HB, BA, and AC are straight lines, and coordinates (x,y,z) of points on the line segments GG' and G'H' are represented by (x, 0.0034x2-1.1115x+47.751, -0.0034x2+0.1115x+52.249).

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 300 or less and a refrigerating capacity ratio of 50% or more relative to that of R410A.

### Requirements

The coordinates (x,y,z) are within the range of a figure surrounded by line segments C'D, DE, EE', E'F, FB', and B'C' that connect the following six points:
point C' (54.0, 46.0, 0.0),
point D (38.0, 0.0, 62.0),
point E (14.0, 0.0, 86.0),
point E' (7.0, 7.0, 86.0),
point F (0.0, 14.4, 85.6), and
point B' (0.0, 32.0, 68.0),
or on the line segments C'D, EE', E'F, and B'C',
the line segments C'D, DE, FB', and B'C' are straight lines, and coordinates (x,y,z) of points on the line segments EE' and E'F are represented by (x, 0.0041x2-1.0857x+14.4, -0.0041x2+0.0857x+85.6).

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 300 or less and a refrigerating capacity ratio of 70% or more relative to that of R410A.

### Requirements

The coordinates (x,y,z) are within the range of a figure surrounded by line segments C'G, GG', G'H', and H'C' that connect the following four points:
point C' (54.0, 46.0, 0.0),
point G (38.0, 0.0, 62.0),
point G' (16.3, 0.0, 83.7), and
point H' (8.2, 6.9, 84.9),
or on the line segments C'G, GG', G'H', and H'C',
the line segments C'G and H'C' are straight lines, and
coordinates (x,y,z) of points on the line segment GG' and G'H' are represented by (x, 0.0034x2-1.1115x+47.751, -0.0034x2+0.1115x+52.249).

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 150 or less and a boiling point of -40°C or less.

### Requirements

The coordinates (x,y,z) are within the range of a figure surrounded by straight lines D'D, DJ, JK, and KD' that connect the following four points:
point D' (43.0, 14.3, 42.7),
point D (38.0, 0.0, 62.0),
point J (28.3, 0.0, 71.7), and
point K (19.3, 9.0, 71.7),
or on the straight lines D'D, JK, and KD'.

In one embodiment of the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 150 or less and a refrigerating capacity ratio of 70% or more relative to that of R404A.

### Requirements

The coordinates (x,y,z) are within the range of a figure surrounded by straight lines D'D, DL, LM, and MD' that connect the following four points:
point D' (43.0, 14.3, 42.7),
point D (38.0, 0.0, 62.0),
point L (22.6, 0.0, 77.4), and
point M (14.0, 7.8, 78.2),
or on the straight lines D'D, LM, and MD'.

The refrigerant of the present disclosure has an occupational exposure limit of 400 ppm or more and is classified as ASHRAE toxicity class "A" when the coordinates (x,y,z) is on the straight line QR or below the straight line QR in a ternary composition diagram in which the sum of HFO-1132(E), R32, and R152a is 100 mass% and whose upper vertex is a point where HFO-1132(E) is 100 mass%.

In the refrigerant according to the present disclosure, a disproportionation reaction does not occur at 3 MPa and 150°C when the coordinates (x,y,z) is on the straight line CD or below the straight line CD in a ternary composition diagram in which the sum of HFO-1132(E), R32, and R152a is 100 mass% and whose upper vertex is a point where HFO-1132(E) is 100 mass%. In this case, the disproportionation reaction can be suppressed even when the refrigerant pressure is locally 3 MPa and the refrigerant temperature is locally 150°C in the refrigeration cycle.

Moreover, the refrigerant according to the present disclosure has the advantage of ease of use in heating with a heat pump when it has a boiling point of -40.0°C or less. For example, using the refrigerant according to the present disclosure for operating a refrigeration cycle in an air-conditioning system for vehicles is advantageous in enabling heating with a heat pump that consumes less power than electric heaters. Examples of air-conditioning systems for vehicles include air-conditioning systems for gasoline vehicles, hybrid vehicles, electric vehicles, and hydrogen vehicles.

The refrigerant according to the present disclosure may contain HFO-1132(E) in an amount of 10 mass% or more, 20 mass% or more, 30 mass% or more, 40 mass% or more, 50 mass% or more, 60 mass% or more, 70 mass% or more, 80 mass% or more, or 90 mass% or more, based on the entire refrigerant. The refrigerant according to the present disclosure may contain R32 in an amount of 10 mass% or more, 20 mass% or more, 30 mass% or more, 40 mass% or more, 50 mass% or more, 60 mass% or more, 70 mass% or more, 80 mass% or more, or 90 mass% or more, based on the entire refrigerant. The refrigerant according to the present disclosure may contain R152a in an amount of 10 mass% or more, 20 mass% or more, 30 mass% or more, 40 mass% or more, 50 mass% or more, 60 mass% or more, 70 mass% or more, 80 mass% or more, or 90 mass% or more, based on the entire refrigerant.

The refrigerant according to the present disclosure may further comprise additional refrigerants, in addition to the essential refrigerants, as long as the above properties and effects are not impaired. In this respect, in one embodiment, the refrigerant according to the present disclosure preferably comprises the essential refrigerants in a total amount of 99.5 mass% or more, more preferably 99.75 mass% or more, even more preferably 99.9 mass% or more, still even more preferably 99.999 mass% or more, and most preferably 99.9999 mass% or more, based on the entire refrigerant. The refrigerant according to the present disclosure may essentially consist of the essential refrigerants. In this case, the refrigerant according to the present disclosure may consist of the essential refrigerants and unavoidable impurities. The refrigerant according to the present disclosure may consist of the essential refrigerants.

Additional refrigerants are not limited and can be widely selected. The mixed refrigerant may contain one additional refrigerant, or two or more additional refrigerants. Examples of the additional refrigerants include acetylene, methylamine, HFO-1132a, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

### 2. Refrigerant Composition

The refrigerant composition according to the present disclosure comprises at least the refrigerant as specified in the claims, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1 Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2 Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferred as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃F)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH2CF₃)

The refrigerant composition according to the present disclosure may comprise one or more tracers at a total concentration of about 10 parts per million by weight (ppm) or more based on the entire refrigerant composition. The refrigerant composition according to the present disclosure may comprise one or more tracers at a total concentration of about 1000 ppm or less, based on the entire refrigerant composition. The refrigerant composition according to the present disclosure preferably comprises one or more tracers at a total concentration of about 30 ppm or more, and more preferably about 50 ppm or more, based on the entire refrigerant composition. The refrigerant composition according to the present disclosure preferably comprises one or more tracers at a total concentration of about 500 ppm or less, and more preferably about 300 ppm or less, based on the entire refrigerant composition.

### 2.3 Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4 Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5 Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more of refrigeration oil. The refrigeration oil-containing working fluid generally comprises 50 mass% or less of refrigeration oil.

### 3.1 Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 mm²/s (5 cSt) or more at 40°C is preferable from the standpoint of lubrication. Further, a refrigeration oil with a kinematic viscosity of 400 mm²/s (400 cSt) or less at 40°C is preferable from the standpoint of lubrication.

The refrigeration oil-containing working fluid according to the present disclosure may further optionally contain at least one additive. Examples of additives include compatibilizing agents described below.

### 3.2 Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### Use as ASHRAE Toxicity Class A

The present disclosure includes a method of use as ASHRAE toxicity class A. Although HFO-1132(E) is classified as toxicity class B, mixing it with R152a and/or R32 produces the effect of allowing the mixed refrigerant to be handled as ASHRAE toxicity class A, in the same manner as in conventional R32 and R410A.

### 5. Method for Suppressing Disproportionation Reaction

The method for suppressing a disproportionation reaction according to the present disclosure is a method for suppressing a disproportionation reaction of HFO-1132(E), the method comprising operating a refrigeration cycle using the refrigerant according to the present disclosure.

The method for suppressing a disproportionation reaction according to the present disclosure produces an effect of preventing a disproportionation reaction of HFO-1132(E) from occurring, in particular, even at a refrigerant pressure of 3.0 MPa and a refrigerant temperature of 150°C.

By the method for suppressing a disproportionation reaction according to the present disclosure, a refrigeration cycle can also be operated while suppressing a disproportionation reaction, in a refrigerating machine that has no particular means for suppressing a disproportionation reaction.

### 6. Use for Suppressing Disproportionation Reaction

The use according to the present disclosure is use of R32 and/or R152a for suppressing a disproportionation reaction of HFO-1132(E); the suppression of the disproportionation reaction is achieved by mixing HFO-1132(E), and R32 and/or R152a such that the mixing ratio thereof is equal to that used in the refrigerant according to the present disclosure.

The use for suppressing a disproportionation reaction according to the present disclosure produces an effect of preventing a disproportionation reaction of HFO-1132(E) from occurring, in particular, even at a refrigerant pressure of 3.0 MPa and a refrigerant temperature of 150°C.

The embodiments are described above; however, it will be understood that various changes in forms and details can be made without departing from the scope of the claims.

### Examples

The present disclosure is described in more detail below with reference to Examples. However, the present disclosure is not limited to the Examples.

Mixed refrigerants were prepared by mixing HFO-1132(E), R32, and R152a at the mass% shown in Table 1 based on their sum.

The occupational exposure limit (OEL value) of each mixed refrigerant was investigated.

**Table 1**

| Item | Unit | Comp. Ex. 0-1 | Comp. Ex. 0-2 | Comp. Ex. 0-3 | Ref. Ex. 0-1 | Ref. Ex. 0-2 | Ex. 0-3 | Ex. 0-4 |
|---|---|---|---|---|---|---|---|---|
| | | W | O | P | Q | R | | |
| HFO-1132 (E) | mass% | 100.0 | 0.0 | 0.0 | 83.7 | 80.2 | 30.0 | 30.0 |
| R32 | mass% | 0.0 | 0.0 | 100.0 | 16.3 | 0.0 | 0.0 | 10.0 |
| R152a | mass% | 0.0 | 100.0 | 0.0 | 0.0 | 19.8 | 70.0 | 60.0 |
| Occupational exposure limit | ppm | 350 | 1000 | 1000 | 400 | 400 | 637 | 643 |
| ASHRAE toxicity class | - | B | A | A | A | A | A | A |

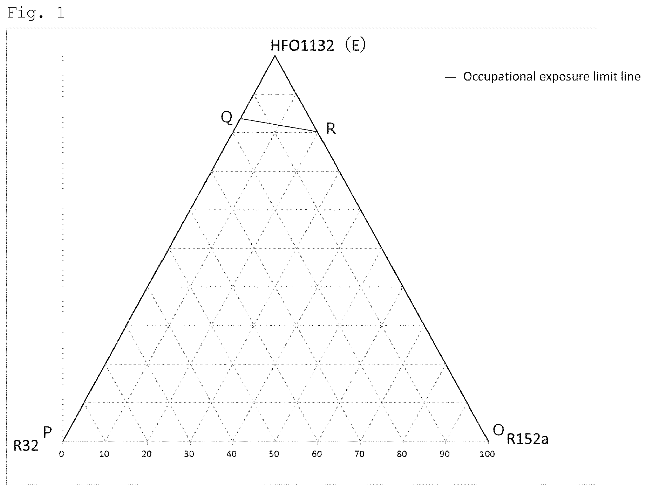

The results in Table 1 show that the refrigerant according to the present disclosure has an occupational exposure limit of 400 ppm or more and is classified as ASHRAE toxicity class "A" in the region shown in the ternary diagram of Fig. 1.

Mixed refrigerants were prepared by mixing HFO-1132(E), R32, and R152a at the mass% shown in Table 2 based on their sum.

Each of these mixed refrigerants was examined in terms of the presence or absence of a disproportionation reaction by using the following test methods under the following conditions.

### Test Methods

A refrigerant composition to be tested was transferred to a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature in the apparatus.

### Test Conditions

Test container: 38-cc SUS container
Test temperature: 150°C
Pressure: 3 MPa

### Determination Criteria

Non-explosion: The temperature or pressure after the melting and cutting of the Pt wire increased to less than twice, and no rapid disproportionation reaction occurred.

Explosion: The temperature or pressure increased to twice or more after the melting and cutting of the Pt wire, and a rapid disproportionation reaction occurred.

**Table 2**

| Item | Unit | Experimental Series 1 | | | Experimental Series 2 | | | | | Experimental Series 3 | | |
|---|---|---|---|---|---|---|---|---|---|---|---|---|
| | | Com p. Ex.1-1 | Ex. 1-1 | Ex. 1-2 | Com p. Ex.1-2 | Com p. Ex.1-3 | Ex. 1-3 | Ex. 1-4 | Ex. 1-5 | Com p. Ex.1-4 | Ex. 1-6 | Ex. 1-7 |
| HFO-1132(E) | Mass % | 56.0 | 54.0 | 52.0 | 49.0 | 49.0 | 47.0 | 45.0 | 45.0 | 40.0 | 38.0 | 36.0 |
| R32 | Mass % | 44.0 | 46.0 | 48.0 | 23.0 | 25.0 | 25.0 | 27.0 | 25.0 | 0.0 | 0.0 | 0.0 |
| R152a | Mass % | 0.0 | 0.0 | 0.0 | 28.0 | 26.0 | 28.0 | 28.0 | 30.0 | 60.0 | 62.0 | 64.0 |
| Disproportio nation reaction (3 Mpa) | | Explo sion | Non-explo sion | Non-explo sion | Explo sion | Explo sion | Non-explo sion | Non-explo sion | Non-explo sion | Explo sion | Non-explo sion | Non-explo sion |

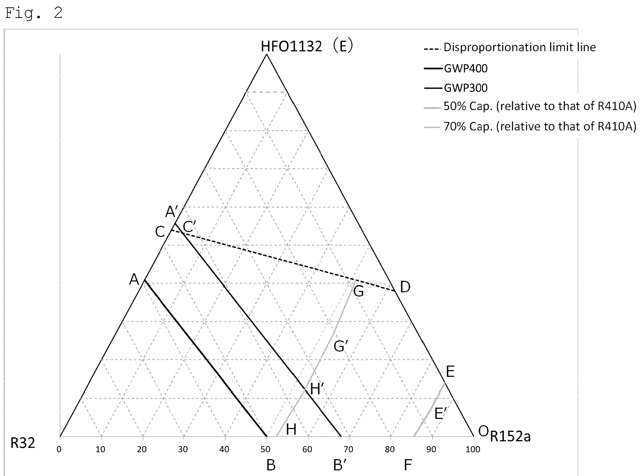

The results in Table 2 show that the refrigerant according to the present disclosure does not undergo disproportionation in the region shown in the ternary diagram of Fig. 2.

The GWP of HFO-1132(E) was set to 1, the GWP of R32 and R152a was based on the values stated in the Intergovernmental Panel on Climate Change (IPCC), fourth report, and the GWP of mixed refrigerants was evaluated. The COP, refrigerating capacity, discharge temperature, and boiling point of mixed refrigerants were determined by performing theoretical refrigeration cycle calculations for mixed refrigerants by using the Reference Fluid Thermodynamic and Transport Properties Database (Refprop 10.0) of the National Institute of Science and Technology (NIST) under the following conditions. The physical property data of HFO-1132(E) used for theoretical refrigeration cycle calculations were obtained from actual measurements, and added to Refprop 10.0.
Ratio relative to R410A
Evaporating temperature: 5°C
Condensation temperature: 45°C
Superheating temperature: 5 K
Subcooling temperature: 5 K
Compressor efficiency: 70%
Ratio relative to R1234yf
Evaporating temperature: -30°C
Condensation temperature: 30°C
Superheating temperature: 5 K
Subcooling temperature: 5 K
Compressor efficiency: 70%
Ratio relative to R404A
Evaporating temperature: -40°C
Condensation temperature: 40°C
Superheating temperature: 20 K
Subcooling temperature: 0 K
Compressor efficiency: 70%

In the tables below, the "COP ratio" and the "refrigerating capacity ratio" are ratios (%) relative to R410A, R404A, or R1234yf. In the tables, the "boiling point (°C)" is a temperature at which the liquid phase of a mixed refrigerant has atmospheric pressure (101.33 kPa).

The coefficient of performance (COP) was determined by the following formula. $\begin{matrix}COP = \left(refrigerating capacity or heating capacity\right) / power \\ consumption\end{matrix}$

In the tables below, the "motor power consumption (%)" refers to electrical energy used to enable an electric vehicle to run, and is expressed as a ratio with respect to a power consumption when the refrigerant is HFO-1234yf. In the tables, the "heater power consumption (%)" refers to electrical energy used to operate a heater by an electric vehicle, and is expressed as a ratio with respect to power consumption when the refrigerant is HFO-1234yf.

In the tables below, the "drivable distance (with a heater turned on)" refers to a distance drivable by an electric vehicle equipped with a rechargeable battery having a constant electric capacity while having a heater turned on, and is expressed as a ratio (%) relative to a drivable distance (without a heater turned on) (100%) when the electric vehicle is driven without a heater turned on (i.e., heater power consumption is 0).

Heating was performed by using an electric heater in the case of a refrigerant having a boiling point of more than -40°C, and using a heat pump in the case of a refrigerant having a boiling point of -40°C or less.

The power consumption when the heater was used was determined according to the following formula. The COP of the heater refers to heating efficiency. 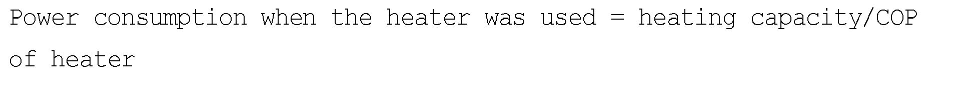 Power consumption when the heater was used = heating capacity/COP of heater

With regard to the heating efficiency, the COP of the heater is 1 in an electric heater, and the heater consumes an electrode equivalent to the motor power. That is, the power consumption of the heater is E=E/(1+COP).

The drivable distance was calculated according to the following formula. 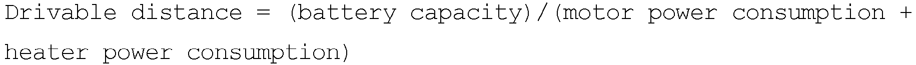 Drivable distance = (battery capacity)/(motor power consumption + heater power consumption)

The tables below show these values together with the GWP of each mixed refrigerant.

**Table 3**

| Item | Unit | Comp. Ex. 2-1 | Comp. Ex. 2-2 | Ex. 2-1 | Comp. Ex. 2-3 | Ex. 2-2 | Comp. Ex. 2-4 | Ex. 2-3 | Comp. Ex. 2-5 |
|---|---|---|---|---|---|---|---|---|---|
| | | | A | B | A' | B' | C | C' | O |
| E-HFO-1132 | Mass% | R410A | 40.8 | 0.0 | 55.7 | 0.0 | 54.0 | 53.4 | 0.0 |
| R32 | Mass% | | 59.2 | 50.0 | 44.3 | 32.0 | 46.0 | 43.8 | 0.0 |
| R152a | Mass% | | 0.0 | 50.0 | 0.0 | 68.0 | 0.0 | 2.8 | 100.0 |
| GWP | - | 2088 | 400 | 400 | 300 | 300 | 311 | 300 | 124 |
| COP ratio | % (relative to R410A) | 100 | 101 | 107 | 101 | 109 | 101 | 101 | 111 |
| Refrigerating capacity ratio | % (relative to R410A) | 100 | 111 | 72 | 110 | 60 | 110 | 108 | 42 |

| Item | Unit | Ex. 2-4 | Ex. 2-5 | Ex. 2-6 | Ex. 2-7 | Ex. 2-8 | Ex. 2-9 | Ex. 2-10 | Ex. 2-11 |
|---|---|---|---|---|---|---|---|---|---|
| | | D | E | E' | F | G | G' | H' | H |
| E-HFO-1132 | Mass% | 38.0 | 14.0 | 7.0 | 0.0 | 40.8 | 26.5 | 12.2 | 0.0 |
| R32 | Mass% | 0.0 | 0.0 | 7.0 | 14.4 | 8.1 | 20.7 | 34.7 | 47.6 |
| R152a | Mass% | 62.0 | 86.0 | 86.0 | 85.6 | 51.1 | 52.8 | 53.1 | 52.4 |
| GWP | - | 77 | 107 | 154 | 203 | 118 | 205 | 300 | 386 |
| COP ratio | % (relative to R410A) | 107 | 110 | 110 | 110 | 106 | 107 | 107 | 107 |
| Refrigeratin g capacity ratio | % (relative to R410A) | 63 | 50 | 50 | 50 | 70 | 70 | 70 | 70 |

The coordinates on line segments E-E'-F and G-G'-H' were determined by the least-squares method as shown below.

**Table 4**

| Item | E | E' | F | G | G' | H' |
|---|---|---|---|---|---|---|
| E-HFO-1132 | 14.0 | 7.0 | 0.0 | 40.8 | 26.5 | 12.2 |
| R32 | 0.0 | 7.0 | 14.4 | 8.1 | 20.7 | 34.7 |
| R152a | 86.0 | 86.0 | 85.6 | 51.1 | 52.8 | 53.1 |
| x=E-HFO-1132 | x | | | x | | |
| R32 approximate expression | 0.0041x²-1.0857x+14.4 | | | 0.0034x²-1.1115x+47.751 | | |
| R152a approximate expression | -0.0041x²+0.0857x+85.6 | | | -0.0034x²+0.1115x+52.249 | | |

**Table 5**

| Item | Unit | Comp. Ex. 2-6 | Ex.. 2-12 | Ex. 2-13 | Ex. 2-14 | Ex. 2-15 | Comp. Ex. 2-7 | Ex. 2-16 | Ex. 2-17 | Ex. 2-18 | Ex. 2-19 |
|---|---|---|---|---|---|---|---|---|---|---|---|
| E-HFO-1132 | Mass% | 5.0 | 5.0 | 5.0 | 5.0 | 5.0 | 5.0 | 15.0 | 15.0 | 15.0 | 15.0 |
| R32 | Mass% | 5.0 | 15.0 | 25.0 | 35.0 | 45.0 | 55.0 | 5.0 | 15.0 | 25.0 | 35.0 |
| R152a | Mass% | 90.0 | 80.0 | 70.0 | 60.0 | 50.0 | 40.0 | 80.0 | 70.0 | 60.0 | 50.0 |
| GWP | - | 145 | 201 | 256 | 311 | 366 | 421 | 133 | 188 | 243 | 298 |
| COP ratio | % (relative to R410A) | 110 | 110 | 109 | 108 | 107 | 106 | 109 | 109 | 108 | 107 |
| Refrigerating capacity ratio | % (relative to R410A) | 48 | 53 | 59 | 65 | 72 | 78 | 54 | 60 | 66 | 72 |

| | | | | | | | | | | | |
|---|---|---|---|---|---|---|---|---|---|---|---|
| Item | Unit | Ex. 2-20 | Comp. Ex. 2-8 | Ex. 2-21 | Ex. 2-22 | Ex. 2-23 | Ex. 2-24 | Ex. 2-25 | Ex. 2-26 | Comp. Ex. 2-9 | Ex. 2-27 |
| E-HFO-1132 | Mass% | 15.0 | 15.0 | 25.0 | 25.0 | 25.0 | 25.0 | 25.0 | 25.0 | 25.0 | 35.0 |
| R32 | Mass% | 45.0 | 60.0 | 0.0 | 10.0 | 20.0 | 30.0 | 40.0 | 50.0 | 60.0 | 0.0 |
| R152a | Mass% | 40.0 | 25.0 | 75.0 | 65.0 | 55.0 | 45.0 | 35.0 | 25.0 | 15.0 | 65.0 |
| GWP | - | 354 | 436 | 93 | 148 | 203 | 259 | 314 | 369 | 424 | 81 |
| COP ratio | % (relative to R410A) | 106 | 104 | 109 | 108 | 107 | 106 | 105 | 104 | 103 | 108 |
| Refrigerating capacity ratio | % (relative to R410A) | 79 | 90 | 56 | 62 | 69 | 75 | 82 | 90 | 98 | 62 |

| Item | Unit | Ex. 2-28 | Ex. 2-29 | Ex. 2-30 | Ex. 2-31 | Ex. 2-32 | Comp. Ex. 2-10 | Comp. Ex. 2-11 | Comp. Ex. 2-12 | Ex. 2-33 | Ex. 2-34 |
|---|---|---|---|---|---|---|---|---|---|---|---|
| E-HFO-1132 | Mass% | 35.0 | 35.0 | 35.0 | 35.0 | 35.0 | 35.0 | 45.0 | 45.0 | 45.0 | 45.0 |
| R32 | Mass% | 10.0 | 20.0 | 30.0 | 40.0 | 50.0 | 60.0 | 0.0 | 10.0 | 30.0 | 40.0 |
| R152a | Mass% | 55.0 | 45.0 | 35.0 | 25.0 | 15.0 | 5.0 | 55.0 | 45.0 | 25.0 | 15.0 |
| GWP | - | 136 | 191 | 246 | 301 | 356 | 412 | 69 | 124 | 234 | 289 |
| COP ratio | % (relative to R410A) | 107 | 106 | 105 | 103 | 103 | 102 | 107 | 105 | 103 | 102 |
| Refrigerating capacity ratio | % (relative to R410A) | 68 | 75 | 82 | 89 | 98 | 107 | 67 | 74 | 89 | 97 |

**Table 6**

| Item | Unit | Ex. 2-35 | Comp Ex. 2-13 | Comp Ex. 2-14 | Comp Ex. 2-15 | Comp Ex. 2-16 | Comp Ex. 2-17 | Comp Ex. 2-18 | Ex. 2-36 | Ex. 2-37 | Ex. 2-38 |
|---|---|---|---|---|---|---|---|---|---|---|---|
| E-HFO-1132 | Mass% | 45.0 | 55.0 | 55.0 | 55.0 | 55.0 | 55.0 | 0.0 | 0.0 | 0.0 | 0.0 |
| R32 | Mass% | 50.0 | 0.0 | 10.0 | 20.0 | 30.0 | 40.0 | 10.0 | 20.0 | 30.0 | 40.0 |
| R152a | Mass% | 5.0 | 45.0 | 35.0 | 25.0 | 15.0 | 5.0 | 90.0 | 80.0 | 70.0 | 60.0 |
| GWP | - | 344 | 56 | 111 | 167 | 222 | 277 | 179 | 234 | 289 | 344 |
| COP ratio | % (relativ e to R410A ) | 101 | 105 | 104 | 103 | 102 | 101 | 110 | 110 | 109 | 108 |
| Refrigerating capacity ratio | % (relativ e to R410A ) | 106 | 72 | 80 | 88 | 96 | 105 | 48 | 53 | 59 | 65 |

| Item | Unit | Ex. 2-39 | Comp. Ex. 2-19 |
|---|---|---|---|
| E-HFO-1132 | Mass% | 0.0 | 0.0 |
| R32 | Mass% | 50.0 | 60.0 |
| R152a | Mass% | 50.0 | 40.0 |
| GWP | - | 400 | 455 |
| COP ratio | % (relative to R410A) | 107 | 106 |
| Refrigerating capacity ratio | % (relative to R410A) | 72 | 78 |

**Table 7**

| Item | Unit | Ex. 2-40 | Ref. Ex. 2-41 | Ref. Ex. 2-42 | Ex. 2-43 | Ref. Ex. 2-44 | Ref. Ex. 2-45 |
|---|---|---|---|---|---|---|---|
| E-HFO-1132 | Mass% | 30.0 | 15.0 | 0.0 | 30.0 | 15.0 | 0.0 |
| HFO-1123 | Mass% | 0.0 | 15.0 | 30.0 | 0.0 | 15.0 | 30.0 |
| R32 | Mass% | 0.0 | 0.0 | 0.0 | 11.0 | 11.0 | 11.0 |
| R152a | Mass% | 70.0 | 70.0 | 70.0 | 59.0 | 59.0 | 59.0 |
| GWP | - | 87 | 87 | 87 | 148 | 148 | 148 |
| COP ratio | % (relative to R410A) | 108 | 108 | 108 | 107 | 107 | 107 |
| Refrigerating capacity ratio | % (relative to R410A) | 59 | 59 | 59 | 66 | 67 | 67 |

These results show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less (Fig. 2).

### Requirements

The coordinates (x,y,z) are within the range of a figure surrounded by straight lines CD, DO, OB, BA, and AC that connect the following five points:
point C (54.0, 46.0, 0.0),
point D (38.0, 0.0, 62.0),
point O (0.0, 0.0, 100.0),
point B (0.0, 50.0, 50.0), and
point A (40.8, 59.2, 0.0),
or on the straight lines CD and BA.

These results show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less and a refrigerating capacity ratio of 50% or more relative to that of R410A (Fig. 2).

### Requirements

The coordinates (x,y,z) are within the range of a figure surrounded by line segments CD, DE, EE', E'F, FB, BA, and AC that connect the following seven points:
point C (54.0, 46.0, 0.0),
point D (38.0, 0.0, 62.0),
point E (14.0, 0.0, 86.0),
point E' (7.0, 7.0, 86.0),
point F (0.0, 14.4, 85.6),
point B (0.0, 50.0, 50.0), and
point A (40.8, 59.2, 0.0),
or on the line segments CD, EE', E'F, and BA,
the line segments CD, DE, FB, BA, and AC are straight lines, and
coordinates (x,y,z) of points on the line segments EE' and E'F are represented by (x, 0.0041x2-1.0857x+14.4, -0.0041x2+0.0857x+85.6).

These results show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 400 or less and a refrigerating capacity ratio of 70% or more relative to that of R410A (Fig. 2).

### Requirements

The coordinates (x,y,z) are within the range of a figure surrounded by line segments CG, GG', G'H', H'H, HB, BA, and AC that connect the following seven points:
point C (54.0, 46.0, 0.0),
point G (38.0, 0.0, 62.0),
point G' (16.3, 0.0, 83.7),
point H' (8.2, 6.9, 84.9),
point H (0.0, 14.4, 85.6),
point B (0.0, 50.0, 50.0), and
point A (40.8, 59.2, 0.0),
or on the line segments CG, GG', G'H', H'H, and BA,
the line segments CG, H'H, HB, BA, and AC are straight lines, and coordinates (x,y,z) of points on the line segments GG' and G'H' are represented by (x, 0.0034x2-1.1115x+47.751, -0.0034x2+0.1115x+52.249).

These results show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 300 or less and a refrigerating capacity ratio of 50% or more relative to that of R410A (Fig. 2).

### Requirements

The coordinates (x,y,z) are within the range of a figure surrounded by line segments C'D, DE, EE', E'F, FB', and B'C' that connect the following six points:
point C' (54.0, 46.0, 0.0),
point D (38.0, 0.0, 62.0),
point E (14.0, 0.0, 86.0),
point E' (7.0, 7.0, 86.0),
point F (0.0, 14.4, 85.6), and
point B' (0.0, 32.0, 68.0),
or on the line segments C'D, EE', E'F, and B'C',
the line segments C'D, DE, FB', and B'C' are straight lines, and coordinates (x,y,z)of points on the line segments EE' and E'F are represented by (x, 0.0041x2-1.0857x+14.4, - 0.0041x2+0.0857x+85.6) .

These results show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 300 or less and a refrigerating capacity ratio of 70% or more relative to that of R410A (Fig. 2).

### Requirements

The coordinates (x,y,z) are within the range of a figure surrounded by line segments C'G, GG', G'H', and H'C' that connect the following four points:
point C' (54.0, 46.0, 0.0),
point G (38.0, 0.0, 62.0),
point G' (16.3, 0.0, 83.7), and
point H' (8.2, 6.9, 84.9),
or on the line segments C'G, GG', G'H', and H'C',
the line segment C'G and H'C' are straight lines, and
coordinates (x,y,z) of points on the line segments GG' and G'H' are represented by (x, 0.0034x2-1.1115x+47.751, -0.0034x2+0.1115x+52.249).

**Table 8**

| Item | | Unit | Ref. Ex. 1 | Com p. Ex. 3-1 | Com p. Ex. 3-2 | Com p. Ex. 3-3 | Ex. 3-1 | Ex. 3-2 | Com p. Ex. 3-4 | Ex. 3-3 | Ex. 3-4 |
|---|---|---|---|---|---|---|---|---|---|---|---|
| | | | | | A" | B" | J | K | C | D' | D |
| Comp osition ratio | E-HFO-1132 | Mass % | R134 a | R123 4yf | 77.9 | 0.0 | 28.3 | 19.3 | 54.0 | 43.0 | 38.0 |
| | R32 | Mass % | | | 22.1 | 4.7 | 0.0 | 9.0 | 46.0 | 14.3 | 0.0 |
| | R152 a | Mass % | | | 0.0 | 95.3 | 71.7 | 71.7 | 0.0 | 42.7 | 62.0 |
| GWP(AR4) | | - | 1430 | 4 | 150 | 150 | 89 | 150 | 311 | 150 | 77 |
| COP ratio (relative to R1234yf) | | % | 105 | 100 | 100 | 108 | 106 | 101 | 101 | 103 | 105 |
| Refrigerating capacity ratio (relative to R1234yf) | | % | 99 | 100 | 301 | 103 | 140 | 313 | 313 | 194 | 155 |
| Motor power consumption | | % | 100 | 100 | 100 | 100 | 100 | 100 | 100 | 100 | 100 |
| Heater power consumption | | % | 95 | 95 | 33 | 95 | 33 | 33 | 33 | 33 | 33 |
| Drivable distance (without a heater tumed on) | | % | 100 | 100 | 100 | 100 | 100 | 100 | 100 | 100 | 100 |
| Drivable distance (with a heater tumed on) | | % | 50 | 50 | 84 | 50 | 84 | 84 | 84 | 84 | 84 |
| Boiling point | | °C | -26.1 | -29.5 | -54.2 | -27.1 | -40.0 | -40.0 | -54.2 | -47.3 | -42.6 |
| Heating method | | Syste m | Electr ic heate r | Electr ic heate r | Heat pum p | Electr ic heate r | Heat pum p | Heat pum p | Heat pum p | Heat pum p | Heat pum p |

**Table 9**

| Item | | Unit | Com p. Ex. 3-5 | Ex. 3-5 | Ex. 3-6 | Com p. Ex. 3-6 | Ex. 3-7 | Ref. Ex. 3-8 | Ref. Ex. 3-9 | Ex. 3-10 | Ex. 3-11 | Ref. Ex. 3-12 |
|---|---|---|---|---|---|---|---|---|---|---|---|---|
| Comp osition ratio | E-HF O-113 2 | Mas s% | 25.0 | 25.0 | 25.0 | 25.0 | 30.0 | 15.0 | 0.0 | 30.0 | 30.0 | 15.0 |
| | HF O-112 3 | Mas s% | 0.0 | 0.0 | 0.0 | 0.0 | 0.0 | 15.0 | 30.0 | 0.0 | 0.0 | 15.0 |
| | R32 | Mas s% | 0.0 | 5.0 | 10.0 | 15.0 | 0.0 | 0.0 | 0.0 | 5.0 | 10.0 | 10.0 |
| | R15 2a | Mas s% | 75.0 | 70.0 | 65.0 | 60.0 | 70.0 | 70.0 | 70.0 | 65.0 | 60.0 | 60.0 |
| GWP(AR4) | | - | 97 | 121 | 148 | 176 | 87 | 87 | 87 | 115 | 142 | 142 |
| COP ratio (relative to R1234yf) | | % | 104 | 106 | 105 | 105 | 106 | 105 | 105 | 105 | 105 | 105 |
| Refrigerating capacity ratio (relative to R1234yf) | | % | 127 | 143 | 152 | 162 | 143 | 144 | 143 | 152 | 161 | 163 |
| Motor power consumption | | % | 100 | 100 | 100 | 100 | 100 | 100 | 100 | 100 | 100 | 100 |
| Heater power consumption | | % | 95 | 33 | 33 | 33 | 33 | 33 | 33 | 33 | 33 | 33 |
| Drivable distance (without a heater tumed on) | | % | 100 | 100 | 100 | 100 | 100 | 100 | 100 | 100 | 100 | 100 |
| Drivable distance (with a heater tumed on) | | % | 50 | 84 | 84 | 84 | 84 | 84 | 84 | 84 | 84 | 84 |
| Boiling point | | °C | -36.8 | -40.7 | -42.1 | -43.4 | -40.5 | -43.4 | -45.2 | -42.1 | -43.5 | -46.0 |
| Heating method | | Syst em | Elect ric heat er | Heat pum p | Heat pum p | Heat pum p | Heat pum p | Heat pum p | Heat pum p | Heat pum p | Heat pum p | Heat pum p |

**Table 9 (Continued)**

| Item | | Unit | Ref. Ex. 3-13 | Comp . Ex. 3-7 | Ex. 3-14 | Ex. 3-15 | Ex. 3-16 | Comp . Ex. 3-8 | Ex. 3-17 | | Comp . Ex. 3-9 | |
|---|---|---|---|---|---|---|---|---|---|---|---|---|
| Compo sition ratio | E-HFO-1132 | Mass % | 0.0 | 30.0 | 35.0 | 35.0 | 35.0 | 35.0 | 40.0 | | 40.0 | |
| | HFO-1123 | Mass % | 30.0 | 0.0 | 0.0 | 0.0 | 0.0 | 0.0 | 0.0 | | 0.0 | |
| | R32 | Mass % | 10.0 | 15.0 | 0.0 | 5.0 | 10.0 | 15.0 | 10.0 | | 15.0 | |
| | R152 a | Mass % | 60.0 | 55.0 | 65.0 | 60.0 | 55.0 | 50.0 | 50.0 | | 45.0 | |
| GWP(AR4) | | - | 142 | 170 | 81 | 109 | 136 | 164 | 130 | | 157 | |
| COP ratio (relative to R1234yf) | | % | 104 | 105 | 105 | 106 | 105 | 105 | 105 | | 104 | |
| Refrigerating capacity ratio (relative to R1234yf) | | % | 163 | 171 | 151 | 156 | 166 | 177 | 175 | | 186 | |
| Motor power consumption | | % | 100 | 100 | 100 | 100 | 100 | 100 | 100 | | 100 | |
| Heater power consumption | | % | 33 | 33 | 33 | 33 | 33 | 33 | 33 | | 33 | |
| Drivable distance (without a heater tumed on) | | % | 100 | 100 | 100 | 100 | 100 | 100 | 100 | | 100 | |
| Drivable distance (with a heater tumed on) | | % | 84 | 84 | 84 | 84 | 84 | 84 | 84 | | 84 | |
| Boiling point | | °C | -47.7 | -44.7 | -41.8 | -42.5 | -44.2 | -45.7 | -45.5 | | -46.9 | |
| Heating method | | Syste m | Heat pump | Heat pump | Heat pump | Heat pump | Heat pump | Heat pump | Heat pump | | Heat pump | |

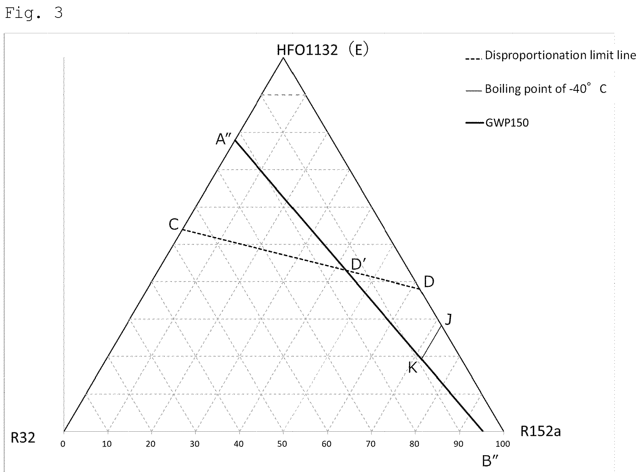

The results in Tables 8 and 9 show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 150 or less and a boiling point of -40°C or less (Fig. 3).

### Requirements

The coordinates (x,y,z) are within the range of a figure surrounded by straight lines D'D, DJ, JK, and KD' that connect the following four points:
point D' (43.0, 14.3, 42.7),
point D (38.0, 0.0, 62.0),
point J (28.3, 0.0, 71.7), and
point K (19.3, 9.0, 71.7)
or on the straight lines D'D, JK, and KD'.

**Table 10**

| Item | Unit | Comp. Ex. 4-1 | Comp. Ex. 4-2 | Comp. Ex. 4-3 | Ex. 4-1 | Ex. 4-2 | Comp. Ex. 4-4 | Ex. 4-3 | Ex. 4-4 |
|---|---|---|---|---|---|---|---|---|---|
| | | | A" | B" | L | M | C | D' | D |
| E-HFO-1132 | Mass% | R404A | 77.9 | 0.0 | 22. 6 | 14. 0 | 54.0 | 43. 0 | 38.0 |
| R32 | Mass% | | 22.1 | 4.7 | 0.0 | 7.8 | 46.0 | 14. 3 | 0.0 |
| R152a | Mass% | | 0.0 | 95.3 | 77. 4 | 78. 2 | 0.0 | 42. 7 | 62.0 |
| GWP | - | 3922 | 150 | 150 | 96 | 150 | 311 | 150 | 77 |
| COP ratio | % (relative to R404A) | 100 | 107 | 121 | 117 | 118 | 108 | 113 | 115 |
| Refrigerating capacity ratio | % (relative to R404A) | 100 | 170 | 57 | 70 | 70 | 178 | 106 | 84 |

**Table 11**

| Item | Unit | Comp. Ex. 4-5 | Comp. Ex. 4-6 | Comp. Ex. 4-7 | Ex. 4-5 | Ex. 4-6 | Ex. 4-7 | Comp. Ex. 4-8 | Ex. 4-8 | Ref. Ex. 4-9 | Ref. Ex. 4-10 |
|---|---|---|---|---|---|---|---|---|---|---|---|
| E-HFO-1132 | Mass% | 15.0 | 15.0 | 15.0 | 25.0 | 25.0 | 25.0 | 25.0 | 30.0 | 15.0 | 0.0 |
| HFO-1123 | Mass% | 0.0 | 0.0 | 0.0 | 0.0 | 0.0 | 0.0 | 0.0 | 0.0 | 15.0 | 30.0 |
| R32 | Mass% | 0.0 | 5.0 | 10.0 | 0.0 | 5.0 | 10.0 | 15.0 | 0.0 | 0.0 | 0.0 |
| R152a | Mass% | 85.0 | 80.0 | 75.0 | 75.0 | 70.0 | 65.0 | 60.0 | 70.0 | 70.0 | 70.0 |
| GWP | - | 106 | 133 | 161 | 93 | 121 | 148 | 176 | 87 | 87 | 87 |
| COP ratio | % (relative to R404A) | 118 | 118 | 117 | 117 | 116 | 116 | 115 | 116 | 115 | 114 |
| Refrigerating capacity ratio | % (relative to R404A) | 64 | 68 | 73 | 72 | 77 | 82 | 88 | 76 | 76 | 74 |

| Item | Unit | Ref. Ex. 4-11 | Ref. Ex. 4-12 | Ref. Ex. 4-13 | Ex. 4-14 | Ex. 4-15 | Ex. 4-16 | Comp. Ex. 4-9 | Ex. 4-17 | Comp. Ex. 4-10 |
|---|---|---|---|---|---|---|---|---|---|---|
| E-HFO-1132 | Mass% | 30.0 | 15.0 | 0.0 | 35.0 | 35.0 | 35.0 | 35.0 | 40.0 | 40.0 |
| HFO-1123 | Mass% | 15.0 | 15.0 | 30.0 | 0.0 | 0.0 | 0.0 | 0.0 | 0.0 | 0.0 |
| R32 | Mass% | 10.0 | 10.0 | 10.0 | 0.0 | 5.0 | 10.0 | 15.0 | 10.0 | 15.0 |
| R152a | Mass% | 60.0 | 60.0 | 60.0 | 65.0 | 60.0 | 55.0 | 50.0 | 50.0 | 45.0 |
| GWP | - | 142 | 142 | 142 | 81 | 109 | 136 | 164 | 130 | 157 |
| COP ratio | % (relative to R404A) | 115 | 114 | 113 | 115 | 115 | 114 | 114 | 114 | 113 |
| Refrigerating capacity ratio | % (relative to R404A) | 87 | 87 | 86 | 81 | 86 | 92 | 98 | 97 | 103 |

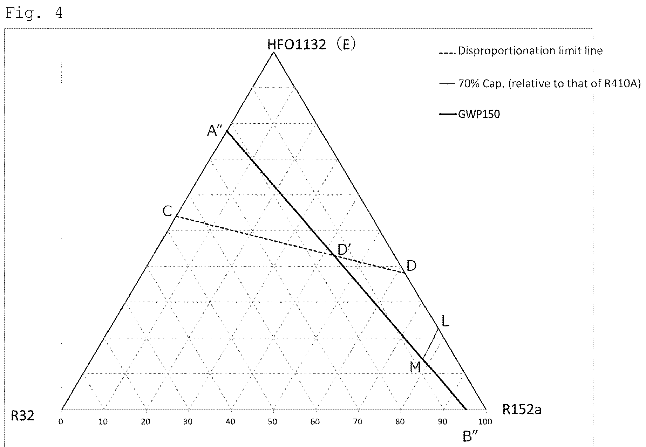

Further, the results in Tables 10 and 11 show that in the refrigerant according to the present disclosure, when the mass% of HFO-1132(E), R32, and R152a based on their sum is respectively represented by x, y, and z, if coordinates (x,y,z) in a ternary composition diagram in which the sum of HFO-1132(E), R32, and R152a is 100 mass% satisfy the following requirements, a disproportionation reaction does not occur at 3 MPa and 150°C, and the refrigerant has a GWP of 150 or less and a refrigerating capacity ratio of 70% or more relative to that of R404A (Fig. 4),

### Requirements

The coordinates (x,y,z) are within the range of a figure surrounded by straight lines D'D, DL, LM, and MD' that connect the following four points:
point D' (43.0, 14.3, 42.7),
point D (38.0, 0.0, 62.0),
point L (22.6, 0.0, 77.4), and
point M (14.0, 7.8, 78.2),
or on the straight lines D'D, LM, and MD'.

Further, the results in Tables 7, 9, and 11 show that the refrigerant according to the present disclosure may contain 1,1-difluoroethane (R152a), difluoromethane (R32), and X in a total amount of 99.5 mass% or more based on the entire refrigerant, wherein X is trans-1,2-difluoroethylene (HFO-1132(E)).

## Claims

1. A composition comprising a refrigerant comprising 1,1-difluoroethane (R152a) difluoromethane (R32) and trans-1,2-difluoroethylene (HFO-1132(E)) in a total amount of ≥ 99.5 mass% based on the entire refrigerant, wherein,
when the mass% of HFO-1132(E), R32, and R152a based on their sum is respectively represented by x, y, and z, coordinates (x,y,z) in a ternary composition diagram in which the sum of HFO-1132(E), R32, and R152a is 100 mass% are within the range of a figure surrounded by straight lines CD, DO, OB, BA, and AC that connect the following five points:
| | |
|---|---|
| C | (54.0, 46.0, 0.0), |
| D | (38.0, 0.0, 62.0), |
| O | (0.0, 0.0, 100.0), |
| B | (0.0, 50.0, 50.0), |
| A | (40.8, 59.2, 0.0), |
and
or on the straight lines CD, DO, OB, and BA (excluding the points C, O, and A).

2. The composition of claim 1, wherein the coordinates (x,y,z) in the ternary composition diagram are within the range of a figure surrounded by line segments CD, DE, EE', E'F, FB, BA, and AC that connect the following seven points:
| | |
|---|---|
| C | (54.0, 46.0, 0.0), |
| D | (38.0, 0.0, 62.0), |
| E | (14.0, 0.0, 86.0), |
| E' | (7.0, 7.0, 86.0), |
| F | (0.0, 14.4, 85.6), |
| B | (0.0, 50.0, 50.0), |
| A | (40.8, 59.2, 0.0), |
and
or on the line segments CD, DE, EE', E'F, FB, and BA (excluding the points C and A),
wherein the line segments CD, DE, FB, BA, and AC are straight lines, and coordinates (x,y,z) of points on the line segments EE' and E'F are represented by (x, 0.0041x2-1.0857x+14.4, -0.0041x2+0.0857x+85.6).

3. The composition of claim 2, wherein the coordinates (x,y,z) in the ternary composition diagram are within the range of a figure surrounded by line segments CG, GG', G'H', H'H, HB, BA, and AC that connect the following seven points:
| | |
|---|---|
| C | (54.0, 46.0, 0.0), |
| G | (40.8, 8.1, 51.1), |
| G' | (26.5, 20.7, 52.8), |
| H' | (12.2, 34.7, 53.1), |
| H | (0.0, 47.6, 52.4), |
| B | (0.0, 50.0, 50.0), |
| A | (40.8, 59.2, 0.0), |
and
or on the line segments CG, GG', G'H', H'H, HB, and BA (excluding the points C and A),
wherein the line segments CG, H'H, HB, BA, and AC are straight lines, and coordinates (x,y,z) of points on the line segments GG' and G'H' are represented by (x, 0.0034x2-1.1115x+47.751, -0.0034x2+0.1115x+52.249).

4. The composition of claim 2, wherein the coordinates (x,y,z) in the ternary composition diagram are within the range of a figure surrounded by line segments C'D, DE, EE', E'F, FB', and B'C' that connect the following six points:
| | |
|---|---|
| C' | (53.4, 43.8, 2.8), |
| D | (38.0, 0.0, 62.0), |
| E | (14.0, 0.0, 86.0), |
| E' | (7.0, 7.0, 86.0), |
| F | (0.0, 14.4, 85.6), |
| B' | (0.0, 32.0, 68.0), |
and
or on the line segments C'D, EE', E'F, FB', and B'C'; wherein the line segments C'D, FB', and B'C' are straight lines.

5. The composition of claim 3, wherein the coordinates (x,y,z) in the ternary composition diagram are within the range of a figure surrounded by line segments C'G, GG', G'H', and H'C' that connect the following four points:
| | |
|---|---|
| C' | (53.4, 43.8, 2.8), |
| G | (40.8, 8.1, 51.1), |
| G' | (26.5, 20.7, 52.8), |
| H' | (12.2, 34.7, 53.1), |
and
or on the line segments C'G, GG', G'H', and H'C'.

6. The composition of claim 4, wherein the coordinates (x,y,z) in the ternary composition diagram are within the range of a figure surrounded by straight lines D'D, DJ, JK, and KD' that connect the following four points:
| | |
|---|---|
| D' | (43.0, 14.3, 42.7), |
| D | (38.0, 0.0, 62.0), |
| J | (28.3, 0.0, 71.7), |
| K | (19.3, 9.0, 71.7), |
and
or on the straight lines D'D, DJ, JK, and KD'.

7. The composition of claim 4, wherein the coordinates (x,y,z) in the ternary composition diagram are within the range of a figure surrounded by straight lines D'D, DL, LM, and MD' that connect the following four points:
| | |
|---|---|
| D' | (43.0, 14.3, 42.7), |
| D | (38.0, 0.0, 62.0), |
| L | (22.6, 0.0, 77.4), |
| M | (14.0, 7.8, 78.2), |
and
or on the straight lines D'D, DL, LM, and MD'.

8. The composition of any claims 1-7, wherein the refrigerant further comprises HFO-1123.

9. A refrigeration method comprising operating a refrigeration cycle using the composition of any of claims 1-8.

10. The refrigeration method of claim 9, wherein the composition of claim 5 is used for operating a refrigeration apparatus which is an air conditioner for gasoline vehicles, hybrid vehicles, electric vehicles, or hydrogen vehicles.

11. A refrigeration apparatus comprising the composition of any of claims 1-8 as a working fluid.

12. The refrigeration apparatus of claim 11, which comprises the composition of claim 8 as a working fluid and is an air conditioner for gasoline vehicles, hybrid vehicles, electric vehicles, or hydrogen vehicles.

13. The use of the composition of claim 5 for operating an air-conditioning system for vehicles.

14. The use of the composition of any of claims 1-8 as an alternative refrigerant for R410A, R134a, R1234yf, or R404A.

## Patentansprüche

1. Zusammensetzung, umfassend ein Kältemittel, das 1,1-Difluorethan (R152a), Difluormethan (R32) und trans-1,2-Difluorethylen (HFO-1132(E)) in einer Gesamtmenge von ≥ 99,5 Massen-%, bezogen auf das gesamte Kältemittel, umfasst, wobei,
wenn die Massen-% von HFO-1132(E), R32, und R152a, bezogen auf deren Summe, jeweils durch x, y bzw. z dargestellt werden, Koordinaten (x,y,z) in einem ternären Zusammensetzungsdiagramm, in dem die Summe von HFO-1132(E), R32, und R152a 100 Massen-% ist, innerhalb des Bereichs einer Figur liegen, die von Geraden CD, DO, OB, BA und AC umgeben ist, die die folgenden fünf Punkte verbinden:
C (54,0; 46,0; 0,0),
D (38,0; 0,0; 62,0),
O (0,0; 0,0; 100,0),
B (0,0; 50,0; 50,0), und
A (40,8; 59,2; 0,0),
oder auf den Geraden CD, DO, OB und BA (ohne die Punkte C, O und A).

2. Zusammensetzung nach Anspruch 1, wobei die Koordinaten (x,y,z) in dem ternären Zusammensetzungsdiagramm innerhalb des Bereichs einer Figur liegen, die von den Liniensegmenten CD, DE, EE', E'F, FB, BA und AC umgeben ist, die die folgenden sieben Punkte verbinden:
C (54,0; 46,0; 0,0),
D (38,0; 0,0; 62,0),
E (14,0; 0,0; 86,0),
E' (7,0; 7,0; 86,0),
F (0,0; 14,4; 85,6),
B (0,0; 50,0; 50,0), und
A (40,8; 59,2; 0,0),
oder auf den Liniensegmenten CD, DE, EE', E'F, FB und BA (ohne die Punkte C und A),
wobei die Liniensegmente CD, DE, FB, BA und AC Geraden sind und Koordinaten (x, y, z) von Punkten auf den Liniensegmenten EE' und E'F durch (x, 0,0041x2-1,0857x+14,4, -0,0041x2+0,0857x+85,6) dargestellt werden.

3. Zusammensetzung nach Anspruch 2, wobei die Koordinaten (x, y, z) in dem ternären Zusammensetzungsdiagramm innerhalb des Bereichs einer Figur liegen, die von den Liniensegmenten CG, GG', G'H', H'H, HB, BA und AC umgeben ist, die die folgenden sieben Punkte verbinden:
C (54,0 46,0; 0,0),
G (40,8; 8,1; 51,1),
G' (26,5; 20,7; 52,8),
H' (12,2; 34,7; 53,1),
H (0,0; 47,6; 52,4),
B (0,0; 50,0; 50,0), und
A (40,8; 59,2; 0,0),
oder auf den Liniensegmenten CG, GG', G'H', H'H, HB und BA (ohne die Punkte C und A),
wobei die Liniensegmente CG, H'H, HB, BA und AC Geraden sind und Koordinaten (x,y,z) von Punkten auf den Liniensegmenten GG' und G'H' durch (x, 0,0034x2-1,1115x+47,751, -0,0034x2+0,1115x+52,249) dargestellt werden.

4. Zusammensetzung nach Anspruch 2, wobei die Koordinaten (x, y, z) in dem ternären Zusammensetzungsdiagramm innerhalb des Bereichs einer Figur liegen, die von den Liniensegmenten C'D, DE, EE', E'F, FB' und B'C' umgeben ist, die die folgenden sechs Punkte verbinden:
C' (53,4; 43,8; 2,8),
D (38,0; 0,0; 62,0),
E (14,0; 0,0; 86,0),
E' (7,0; 7,0; 86,0),
F (0,0; 14,4; 85,6), und
B' (0,0; 32,0; 68,0),
oder auf den Liniensegmenten C'D, EE', E'F, FB' und B'C'; wobei die Liniensegmente C'D, FB' und B'C' Geraden sind.

5. Zusammensetzung nach Anspruch 3, wobei die Koordinaten (x,y,z) in dem ternären Zusammensetzungsdiagramm innerhalb des Bereichs einer Figur liegen, die von den Liniensegmenten C'G, GG', G'H' und H'C' umgeben ist, die die folgenden vier Punkte verbinden:
C' (53,4; 43,8; 2,8),
G (40,8; 8,1; 51,1),
G' (26,5; 20,7; 52,8), und
H' (12,2; 34,7; 53,1),
oder auf den Liniensegmenten C'G, GG', G'H' und H'C'.

6. Zusammensetzung nach Anspruch 4, wobei die Koordinaten (x,y,z) in dem ternären Zusammensetzungsdiagramm innerhalb des Bereichs einer Figur liegen, die von Geraden D'D, DJ, JK und KD' umgeben ist, die die folgenden vier Punkte verbinden:
D' (43,0; 14,3; 42,7),
D (38,0; 0,0; 62,0),
J (28,3; 0,0; 71,7), und
K (19,3; 9,0; 71,7),
oder auf den Geraden D'D, DJ, JK und KD'.

7. Zusammensetzung nach Anspruch 4, wobei die Koordinaten (x,y,z) in dem ternären Zusammensetzungsdiagramm innerhalb des Bereichs einer Figur liegen, die von Geraden D'D, DL, LM und MD' umgeben ist, die die folgenden vier Punkte verbinden:
D' (43,0; 14,3; 42,7),
D (38,0; 0,0; 62,0),
L (22,6; 0,0; 77,4), und
M (14,0; 7,8; 78,2),
oder auf den Geraden D'D, DL, LM und MD'.

8. Zusammensetzung nach einem der Ansprüche 1-7, wobei das Kältemittel weiter HFO-1123 umfasst.

9. Kühlverfahren, umfassend das Betreiben eines Kältekreislaufs unter Verwendung der Zusammensetzung nach einem der Ansprüche 1-8.

10. Kühlverfahren nach Anspruch 9, wobei die Zusammensetzung nach Anspruch 5 zum Betreiben einer Kühlvorrichtung verwendet wird, die eine Klimaanlage für Benzinfahrzeuge, Hybridfahrzeuge, Elektrofahrzeuge oder Wasserstofffahrzeuge ist.

11. Kühlvorrichtung, umfassend die Zusammensetzung nach einem der Ansprüche 1-8 als Arbeitsmedium.

12. Kühlvorrichtung nach Anspruch 11, die die Zusammensetzung nach Anspruch 8 als Arbeitsmedium umfasst und eine Klimaanlage für Benzinfahrzeuge, Hybridfahrzeuge, Elektrofahrzeuge oder Wasserstofffahrzeuge ist.

13. Verwendung der Zusammensetzung nach Anspruch 5 zum Betreiben einer Klimaanlage für Fahrzeuge.

14. Verwendung der Zusammensetzung nach einem der Ansprüche 1-8 als alternatives Kältemittel für R410A, R134a, R1234yf, oder R404A.

## Revendications

1. Composition comprenant un fluide frigorigène comprenant du 1,1-difluoroéthane (R152a), du difluorométhane (R32) et du trans-1,2-difluoroéthylène (HFO-1132(E)) dans une quantité totale de ≥ 99,5 % en masse sur la base du fluide frigorigène entier, dans laquelle,
lorsque le % en masse de HFO-1132(E), de R32 et de R152a sur la base de leur somme est respectivement représenté par x, y et z, les coordonnées (x, y, z) dans un diagramme de composition ternaire dans lequel la somme de HFO-1132(E), de R32 et de R152a est de 100 % en masse sont dans la plage d'une figure entourée par les droites CD, DO, OB, BA et AC qui relient les cinq points suivants :
C (54,0, 46,0, 0,0),
D (38,0, 0,0, 62,0),
O (0,0, 0,0, 100,0),
B (0,0, 50,0, 50,0), et
A (40,8, 59,2, 0,0),
ou sur les droites CD, DO, OB et BA (à l'exclusion des points C, O et A).

2. Composition selon la revendication 1, dans laquelle les coordonnées (x, y, z) dans le diagramme de composition ternaire sont dans la plage d'une figure entourée par les segments de droite CD, DE, EE', E'F, FB, BA et AC qui relient les sept points suivants :
C (54,0, 46,0, 0,0),
D (38,0, 0,0, 62,0),
E (14,0, 0,0, 86,0),
E' (7,0, 7,0, 86,0),
F (0,0, 14,4, 85,6),
B (0,0, 50,0, 50,0), et
A (40,8, 59,2, 0,0),
ou sur les segments de droite CD, DE, EE', E'F, FB et BA (à l'exclusion des points C et A),
dans laquelle les segments de droite CD, DE, FB, BA et AC sont des droites, et les coordonnées (x, y, z) de points sur les segments de droite EE' et E'F sont représentées par (x, 0,0041x2-1,0857x+14,4, -0,0041x2+0,0857x+85,6).

3. Composition selon la revendication 2, dans laquelle les coordonnées (x, y, z) dans le diagramme de composition ternaire sont dans la plage d'une figure entourée par les segments de droite CG, GG', G'H', H'H, HB, BA et AC qui relient les sept points suivants :
C (54,0, 46,0, 0,0),
G (40,8, 8,1, 51,1),
G' (26,5, 20,7, 52,8),
H' (12,2, 34,7, 53,1),
H (0,0, 47,6, 52,4),
B (0,0, 50,0, 50,0), et
A (40,8, 59,2, 0,0),
ou sur les segments de droite CG, GG', G'H', H'H, HB et BA (à l'exclusion des points C et A),
dans laquelle les segments de droite CG, H'H, HB, BA et AC sont des droites, et les coordonnées (x, y, z) de points sur les segments de droite GG' et G'H' sont représentées par (x, 0,0034x2-1,1115x+47,751, -0,0034x2+0,1115x+52,249).

4. Composition selon la revendication 2, dans laquelle les coordonnées (x, y, z) dans le diagramme de composition ternaire sont dans la plage d'une figure entourée par les segments de droite C'D, DE, EE', E'F, FB' et B'C' qui relient les six points suivants :
C' (53,4, 43,8, 2,8),
D (38,0, 0,0, 62,0),
E (14,0, 0,0, 86,0),
E' (7,0, 7,0, 86,0),
F (0,0, 14,4, 85,6), et
B' (0,0, 32,0, 68,0),
ou sur les segments de droite C'D, EE', E'F, FB' et B'C' ; dans laquelle les segments de droite C'D, FB' et B'C' sont des droites.

5. Composition selon la revendication 3, dans laquelle les coordonnées (x, y, z) dans le diagramme de composition ternaire sont dans la plage d'une figure entourée par les segments de droite C'G, GG', G'H' et H'C' qui relient les quatre points suivants :
C' (53,4, 43,8, 2,8),
G (40,8, 8,1, 51,1),
G' (26,5, 20,7, 52,8), et
H' (12,2, 34,7, 53,1),
ou sur les segments de droite C'G, GG', G'H' et H'C'.

6. Composition selon la revendication 4, dans laquelle les coordonnées (x, y, z) dans le diagramme de composition ternaire sont dans la plage d'une figure entourée par les droites D'D, DJ, JK et KD' qui relient les quatre points suivants :
D' (43,0, 14,3, 42,7),
D (38,0, 0,0, 62,0),
J (28,3, 0,0, 71,7), et
K (19,3, 9,0, 71,7),
ou sur les droites D'D, DJ, JK et KD'.

7. Composition selon la revendication 4, dans laquelle les coordonnées (x, y, z) dans le diagramme de composition ternaire sont dans la plage d'une figure entourée par les droites D'D, DL, LM et MD' qui relient les quatre points suivants :
D' (43,0, 14,3, 42,7),
D (38,0, 0,0, 62,0),
L (22,6, 0,0, 77,4), et
M (14,0, 7,8, 78,2),
ou sur les droites D'D, DL, LM, et MD'.

8. Composition selon l'une quelconque des revendications 1 à 7, dans laquelle le fluide frigorigène comprend en outre du HFO-1123.

9. Procédé de réfrigération comprenant l'actionnement d'un cycle frigorifique utilisant la composition selon l'une quelconque des revendications 1 à 8.

10. Procédé de réfrigération selon la revendication 9, dans lequel la composition selon la revendication 5 est utilisée pour l'actionnement d'un appareil de réfrigération qui est un climatiseur pour véhicules à essence, véhicules hybrides, véhicules électriques ou véhicules à hydrogène.

11. Appareil de réfrigération comprenant la composition selon l'une quelconque des revendications 1 à 8 en tant que fluide de travail.

12. Appareil de réfrigération selon la revendication 11, qui comprend la composition selon la revendication 8 en tant que fluide de travail et qui est un climatiseur pour véhicules à essence, véhicules hybrides, véhicules électriques ou véhicules à hydrogène.

13. Utilisation de la composition selon la revendication 5 pour l'actionnement d'un système de climatisation pour véhicules.

14. Utilisation de la composition selon l'une quelconque des revendications 1 à 8 en tant que fluide frigorigène de remplacement pour R410A, R134a, R1234yf ou R404A.
